# EUROPEAN PATENT SPECIFICATION

(11) **EP 3 575 155 B1**
(45) Date of publication and mention of the grant of the patent: **08.12.2021**
(21) Application number: 19175315.1
(22) Date of filing: 20.05.2019
(51) Int. Cl.: B60R 16/02

(54) **VEHICLE WIRING HARNESS BODY AND METHOD OF MANUFACTURING VEHICLE WIRING HARNESS BODY**
FAHRZEUGKABELBAUMKÖRPER UND VERFAHREN ZUR HERSTELLUNG EINES FAHRZEUGKABELBAUMKÖRPERS
CORPS DE FAISCEAU ÉLECTRIQUE DE VÉHICULE ET PROCÉDÉ DE FABRICATION D'UN CORPS DE FAISCEAU ÉLECTRIQUE DE VÉHICULE

(30) Priority: 30.05.2018 JP 2018103687
(43) Date of publication of application: 04.12.2019
(73) Proprietor: YAZAKI CORPORATION, Minato-ku, Tokyo 108-8333 (JP)
(72) Inventor: TAKAMATSU, Masahiro, Makinohara-shi, Shizuoka 421-0407 (JP); TAKAHASHI, Hideo, Makinohara-shi, Shizuoka 421-0407 (JP); YAMASHITA, Toshiaki, Makinohara-shi, Shizuoka 421-0407 (JP); GOTO, Satoru, Makinohara-shi, Shizuoka 421-0407 (JP)
(74) Representative: Grünecker Patent- und Rechtsanwälte PartG mbB

(56) References cited:
- EP-A1- 2 320 533
- WO-A1-2008/022661
- WO-A1-2014/156591
- WO-A1-2017/064114
- DE-A1-102016 114 945
- DE-A1-102017 125 430
- JP-A- 2014 010 905
- US-A1- 2007 023 585
- US-A1- 2008 035 800

## Description

### BACKGROUND

### 1. Technical Field

The present invention relates to a vehicle circuit body routed in a vehicle and a method of manufacturing the same.

### 2. Background Art

A vehicle typically performs power supply by routing a wire harness (vehicle circuit body), which is an aggregate of a large number of electrical wires, in the vehicle and connecting a main power supply and electronic components of the vehicle via a power supply wire in the wire harness. The vehicle also includes a plurality of control units to control these electronic components. The control units and the electronic components are connected by communication electrical wires in the wire harness to enable communication with each other.

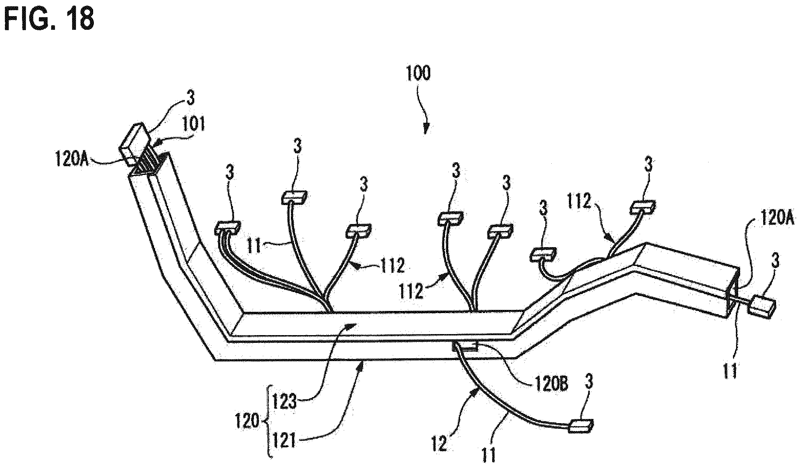

Generally, the wire harness is routed in the vehicle by housing at least a prescribed part of a main line thereof in a protection member such as a protector. A protector used in the wire harness is illustrated in FIG. 18 as an example.

A protector 120 illustrated in FIG. 18 includes a main body 121 and a lid 123 which forms an elongated tubular body, by being combined with each other, capable of housing a main line 110 of an electrical wire bundle 101 which forms a wire harness 100. The main body 121 and the lid 123 are engaged with each other with a plurality of lock portions (not illustrated).

The protector 120 includes a main line lead-out portion 120A at both end portions of the protector and a plurality of branch line lead-out portions 120B on a side portion of an intermediate portion of the protector. The main line 110 of the electrical wire bundle 101 is drawn out from the main line lead-out portion 120A, and branch lines 112 of the electrical wire bundle 101 are drawn out from the branch line lead-out portions 120B. A connector 3 to be connected to a junction block, an electronic component, or the like (not illustrated) is attached to a harness terminal of the main line 110 and the branch lines 112.

In the related art, the wire harness 100 in which the electrical wire bundle 101 is housed and protected by the protector 120 is manufactured by following procedures.

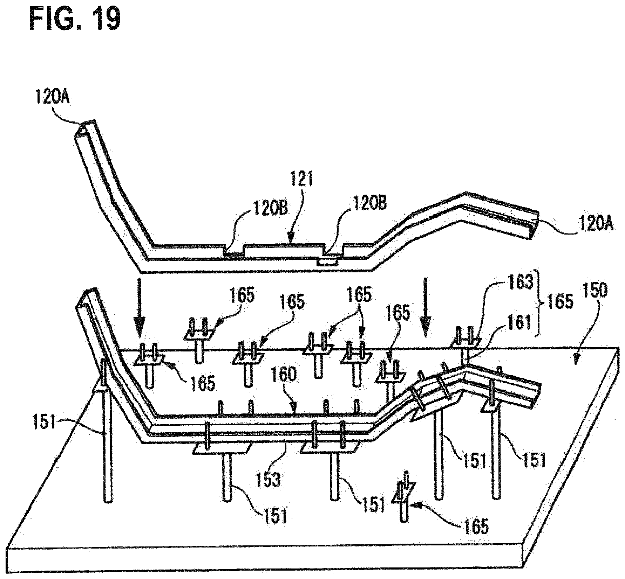

As illustrated in FIG. 19, a protector dedicated jig 160 and routing jigs 165 are arranged on a wiring board 150 in accordance with a routing path of the electrical wire bundle 101 constituting the wire harness 100.

In the protector dedicated jig 160, a protector holding unit 153 that holds the main body 121 of the protector 120 is disposed on a plurality of base portions 151 fixed on the wiring board 150. The protector holding unit 153 includes an elongated holding groove having a U-shaped cross section corresponding to the main body 121 bent into a prescribed shape along an attachment portion of a vehicle body, and the mounted main body 121 may be held and fixed at a prescribed position above the wiring board 150.

Each of the routing jigs 165 is for a harness terminal and has a configuration in which a pair of pin-shaped electrical wire hook portions 163 is disposed on a base portion 161 fixed on the wiring board 150. The electrical wire hook portions 163 are set to have a pin interval or the like so that the connector 3 or the like connected to a harness terminal is easily hooked.

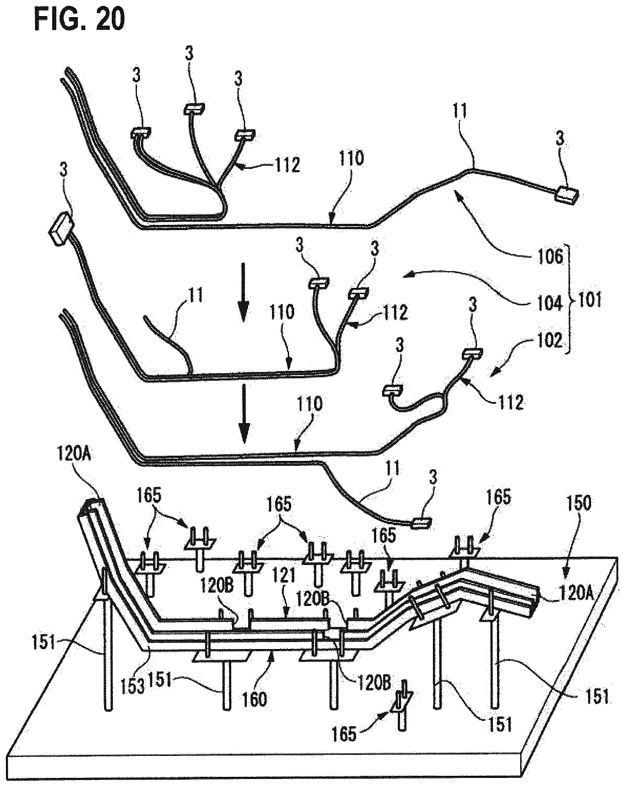

First, the main body 121 of the protector 120 is set in the protector dedicated jig 160 on the wiring board 150, as illustrated in FIGS. 19 and 20.

Next, each of sub-harnesses 102, 104, 106 in the electrical wire bundle 101 which forms the wire harness 100 is routed to the protector dedicated jig 160 and the routing jigs 165 on the wiring board 150. The sub-harnesses 102, 104, 106 form the electrical wire bundle 101 routed in a prescribed size and shape, in which the main line 110 is housed in the main body 121 of the protector 120 held by the protector dedicated jig 160, and connectors 3 of the branch lines 112 drawn out from the branch line lead-out portions 120B are hooked on the routing jig 165.

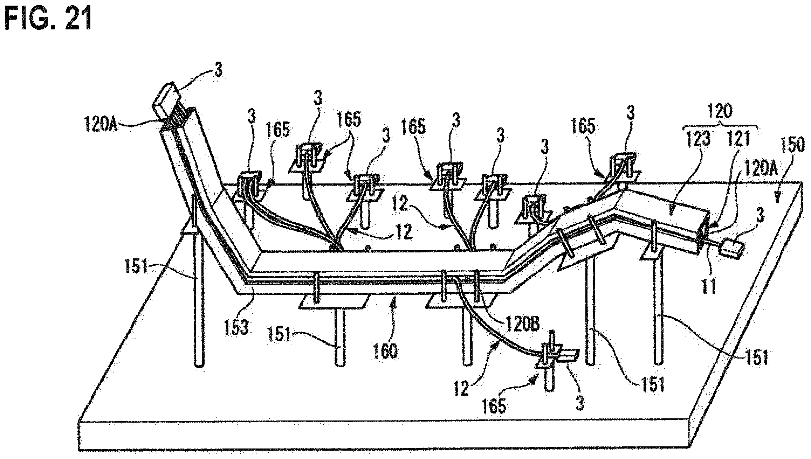

Then, the lid 123 is united and engaged so as to cover a housing portion of the main body 121, as illustrated in FIG. 21.

When necessary, a corrugated tube or a tape (not illustrated) is installed to the main line 110 drawn out from the main line lead-out portion 120A of the protector 120 and the branch lines 112 drawn out from the branch line lead-out portions 120B.

However, in the above manufacturing process of the wire harness 100, a large number of electrical wires 11 constituting the wire harness 100 are routed over a long distance along a previously specified path in order to finish the wire harness 100 into a prescribed routing shape. Particularly, the number of bundled electrical wires in the main line 110 of the wire harness 100 is large since the electrical wires 11 for power supply are necessary for each auxiliary device, resulting a long work time, as well as a heavy wire harness because of gathering almost all the electrical wires 11. As a result, a large protector 120 is required for each vehicle, and the protector dedicated jig 160 that holds the protector 120 also increases in size.

Such a wire harness is upgraded due to an increase in the number of mounted electronic components and complexity of control. Also, safety requirements for various functions are also increasing to cope automated driving as automated driving techniques have evolved rapidly.

Accordingly, a structure of a wire harness wired on a vehicle body tends to be complicated. It is also desired to simplify the routing path and inhibit malfunction and degradation of auxiliary devices due to influence of electromagnetic noises caused by a large current, for example, in JP-A-2017-185996 and JP-A-2003-24419.

The present invention is made in view of the above circumstances, and an object thereof is to provide a vehicle circuit body and a method of manufacturing a vehicle circuit body. Such a vehicle circuit body includes a structure to electrically connect various electronic components to a power supply in a vehicle and to another electronic components, particularly a structure to simplify a configuration of a main line part, and a structure capable of improving noise resistance performances.

### SUMMARY OF THE INVENTION

According to an aspect of the invention, (1) a vehicle circuit body includes a flat routing member that forms a main line of the vehicle circuit body, and an electrical wire bundle that includes a plurality of electrical wires in a prescribed routing shape, in which a part of the electrical wire bundle which forms the main line is routed on the flat routing member.

According to the vehicle circuit body having the configuration in (1), it is possible to form the main line having a simple structure with: the flat routing member which forms the main line, and the part of the electrical wire bundle which forms the main line, the electrical wire bundle having a prescribed routing shape. That is, the power supply line which is the main line can be aggregated by the flat routing member which includes the strip-shaped flat conductor having a large cross sectional area in order to ensure the prescribed current capacity. The main line can be reduced in weight by reducing the number of electrical wires for power supply in the main line.

Since the flat routing member is formed of a metal plate capable of maintaining a shape, a part thereof constituting the main line can be routed directly on the vehicle together with the electrical wire bundle routed on the flat routing member, so that a large protector that houses the main line of the vehicle circuit body can be omitted.

(2) The vehicle circuit body according to (1) further includes a shielding member that blocks noises from the flat routing member for power supply and is disposed between the flat routing member and the electrical wire bundle.

According to the vehicle circuit body having the configuration in (2), the shielding member that blocks noises is disposed between the flat routing member for power supply, which electrically connects electronic components and a power supply, and the electrical wire bundle routed on the flat routing member. Therefore, electromagnetic noises generated by a large current flowing through the flat routing member are blocked by the shielding member, so that noises do not go to a communication electrical wire or the like of the electrical wire bundle. As a result, no noise countermeasures in the related art are necessary to be applied to a plurality of communication electrical wires, so that cost can be reduced.

(3) In the vehicle circuit body according to (1), the part of the electrical wire bundle which forms the main line includes a plurality of ground electrical wires disposed in parallel on the flat routing member for power supply, and communication electrical wires stacked on the ground electrical wires.

According to the vehicle circuit body having the configuration in (3), the electrical wire bundle is routed on the flat wiring member for power supply that electrically connects electronic components and a power supply, in which the part of the electrical wire bundle which forms the main line is routed separately as the plurality of ground electrical wires arranged in parallel on the flat routing member and the communication electrical wires stacked on the ground electrical wires. Therefore, electromagnetic noises generated by a large current flowing through the flat routing member are blocked by the plurality of ground electrical wires in the electrical wire bundle, so that noises do not go to the communication electrical wires stacked on the plurality of ground electrical wires. As a result, the number of components is not increased, neither noise countermeasures in the related art are necessary to be applied to a plurality of communication electrical wires, so that cost can be reduced.

(4) The vehicle circuit body according to (3) further includes a ground sub-harness, in which the plurality of ground electrical wires are collectively sandwiched in a first sheet member, and at least one communication sub-harness stacked on the ground sub-harness, in which a plurality of the communication electrical wires are collectively sandwiched in a second sheet member and stacked on the ground sub-harness.

According to the vehicle circuit body in (4), the ground sub-harness including the plurality of ground electrical wires and the communication sub-harness including the plurality of communication electrical wires in the part of the electrical wire bundle which forms the main line are collectively sandwiched by the sheet member such as a PET sheet in advance, respectively. Therefore, it is easy to route the plurality of ground electrical wires and the plurality of communication electrical wires on the flat routing member.

When at least one of the ground sub-harness and the communication sub-harness is collectively sandwiched by a one-sided adhesive sheet as the sheet member, a part of the electrical wires branched from the middle of the main line sandwiched by the one-sided adhesive sheet is held in a state of extending in a prescribed branch direction, so that the branch portion can be easily formed.

(5) In the vehicle circuit body according to (1), the part of the electrical wire bundle which forms the main line is routed on the flat routing member for power supply, a plurality of the electrical wires are gathered in each sub-harness and sandwiched in a shielding member that blocks noises.

According to the vehicle circuit body having the configuration in (5), the plurality of electrical wires in the part of the electrical wire bundle which forms the main line are gathered in each sub-harness and are collectively sandwiched in the shielding member made of braided wires or a metal foil that blocks noises in advance. Therefore, it is easy to route the sub-harness on the flat routing member. Further, electromagnetic noises generated by a large current flowing through the flat routing member are blocked by the shielding member, so that noises do not go to the sub-harnesses routed on the flat wiring member. As a result, no noise countermeasures in the related art are necessary to be applied to a plurality of communication electrical wires, so that cost can be reduced.

(6) In the vehicle circuit body according to any one of (1) to (5), a branch protector is arranged at a main line branch position of the flat routing member from the electrical wire bundle to hold a part of the electrical wires in a branched state.

According to the vehicle circuit body having the configuration in (6), the part of the electrical wires from the electrical wire bundle routed on the flat routing member can be easily held as the branch line by the branch protector arranged at the main line branch position of the flat routing member. Branch protectors having the same form can be used at a plurality of branch locations, and it is also possible to prevent an increase in cost due to an increase in the number of components. The branch protector in which the electrical wires are routed is covered with the cover, so that the electrical wires can also be prevented from jumping out. Regarding locations of the flat routing member where the branch protector is not arranged, tape winding or the like can be performed to prevent the electrical wires from jumping out.

(7) In the vehicle circuit body according to any one of (1) to (6), the part of the electrical wire bundle which forms the main line is fixed to an upper surface of the flat routing member by a fixing member.

According to the vehicle circuit body having the configuration in (7), the part of the electrical wire bundle, which forms the main line and is routed on the upper surface of the flat routing member, is fixed by the fixing member such as an adhesive tape, a binding band, and a small protector. Therefore, the electrical wire bundle is routed without spilling from the upper surface of the flat routing member, so that a large protector that houses the main line of the vehicle circuit body can be omitted.

According to another aspect of the invention, (8) a method of manufacturing a vehicle circuit body using a routing jig on a wiring board includes routing a flat routing member that forms a main line of a vehicle circuit body on the routing jig, and routing a part of an electrical wire bundle which forms the main line on an upper surface of the flat routing member, in which the electrical wire bundle includes a plurality of electrical wires in a prescribed routing shape.

According to the method of manufacturing a vehicle circuit body having the configuration in (8), it is possible to manufacture the vehicle circuit body including the main line having a simple structure with: the flat routing member which forms the main line, and the part of the electrical wire bundle which forms the main line, the electrical wire bundle having a prescribed routing shape. That is, the power supply line which is the main line can be aggregated by the flat routing member which includes the strip-shaped flat conductor having a large cross sectional area in order to ensure the prescribed current capacity, and the number of electrical wires for power supply in the main line can be reduced. Therefore, it is possible to reduce time for routing the electrical wire bundle when the vehicle circuit body is manufactured.

Since the flat routing member is formed of a metal plate that can maintain a shape, the flat routing member can be directly arranged on the routing jigs on the wiring board, and the part of the electrical wire bundle which forms the main line can be directly arranged on the flat routing member, so that a large protector that houses the main line of the vehicle circuit body 1 can be omitted. Therefore, the protector dedicated jig, which includes the protector holding unit that holds the protector, is not necessarily used, and the wiring board including only the routing jigs of normal shapes can do the routing.

Therefore, according to the vehicle circuit body and the method of manufacturing a vehicle circuit body in the present invention, it is possible to provide a vehicle circuit body and a method of manufacturing a vehicle circuit body. Such a vehicle circuit body has a simplified structure for electrical connection between various electronic components and a power supply in the vehicle and within the electronic components, particularly, a simplified configuration of the main line part.

The present invention is briefly described as above. Details of the present invention is clarified by reading a mode (hereinafter, referred to as "embodiment") for carrying out the present invention described below with reference to the accompanying drawings.

### BRIEF DESCRIPTION OF DRAWINGS

FIG. 1 is an overall perspective view illustrating a vehicle circuit body according to a first embodiment of the present invention.
FIG. 2 is an exploded perspective view illustrating the vehicle circuit body in FIG. 1.
FIG. 3 is a schematic configuration view illustrating a wiring board on which a main line routing jig and a branch line routing jig are arranged along a routing path of the vehicle circuit body in FIG. 1 so as to manufacture the vehicle circuit body.
FIG. 4A illustrates a main line arranging step in a method of manufacturing the vehicle circuit body according to the first embodiment of the present invention, and FIG. 4B is a cross sectional view taken along a line A-A in FIG. 4A.
FIG. 5A illustrates an electrical wire routing step in the method of manufacturing the vehicle circuit body according to the first embodiment, and FIG. 5B is a cross sectional view taken along a line B-B in FIG. 5A.
FIG. 6A illustrates a tape winding step after the electrical wire routing step in the method of manufacturing the vehicle circuit body according to the first embodiment, and FIG. 6B is a cross sectional view taken along a line C-C in FIG. 6A.
FIGS. 7A and 7B are exploded perspective views illustrating a main part of a main line of a vehicle circuit body according to a second embodiment of the present invention, in which FIG. 7A illustrates a state before a branch protector is attached to a flat routing member, and FIG. 7B illustrates a state in which the branch protector is attached to a main line branch position of the flat routing member.
FIG. 8 is an exploded perspective view illustrating a main part of a main line of the vehicle circuit body according to the second embodiment in a state in which a shielding member is disposed between the flat routing member and an electrical wire bundle.
FIG. 9A is a cross sectional view illustrating the main line of the vehicle circuit body in FIG. 8, and FIG. 9B is an enlarged view illustrating a main part in FIG. 9A.
FIG. 10 is an exploded perspective view illustrating a main part of a main line of a vehicle circuit body according to a third embodiment of the present invention;
FIG. 11A is a cross sectional view illustrating the main line of the vehicle circuit body in FIG. 10, and FIG. 11B is an enlarged view illustrating a main part in FIG. 11A.
FIG. 12 illustrates an electrical wire routing step in a method of manufacturing a vehicle circuit body according to a reference example.
FIGS. 13A to 13C illustrate procedures of forming sub-harnesses constituting a main line of a vehicle circuit body according to a fourth embodiment of the present invention.
FIG. 14 is an exploded perspective view illustrating a main part of the main line of the vehicle circuit body according to the fourth embodiment.
FIG. 15A is a cross sectional view illustrating the main line of the vehicle circuit body in FIG. 14, and FIGS. 15B and 15C are cross sectional views illustrating modifications of the main line of the vehicle circuit body in FIG. 15A.
FIGS. 16A to 16C are enlarged perspective views illustrating a branch portion of the vehicle circuit body according to the fourth embodiment of the present invention.
FIGS. 17A to 17C illustrate procedures of forming a main line of a vehicle circuit body according to a fifth embodiment of the present invention.
FIG. 18 is an overall perspective view illustrating a wire harness in the related art.
FIG. 19 is a schematic configuration view illustrating a wiring board on which a protector dedicated jig and a routing jig are arranged along a routing path of the wire harness in FIG. 18 so as to manufacture the wire harness.
FIG. 20 illustrates a sub-harness routing step in a method of manufacturing the wire harness in FIG. 18.
FIG. 21 illustrates a step of uniting and engaging a main body and a lid of a protector after the sub-harness routing step in the method of manufacturing the wire harness in FIG. 18.

### DETAILED DESCRIPTION OF EMBODIMENTS

Specific embodiments according to a vehicle circuit body and a method of manufacturing a vehicle circuit body of the present invention are described below with reference to drawings.

### [Vehicle Circuit Body of First Embodiment]

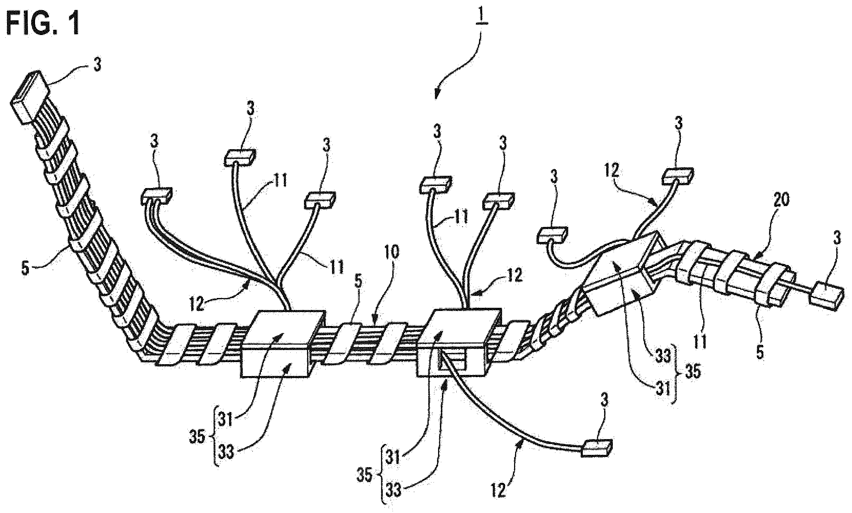

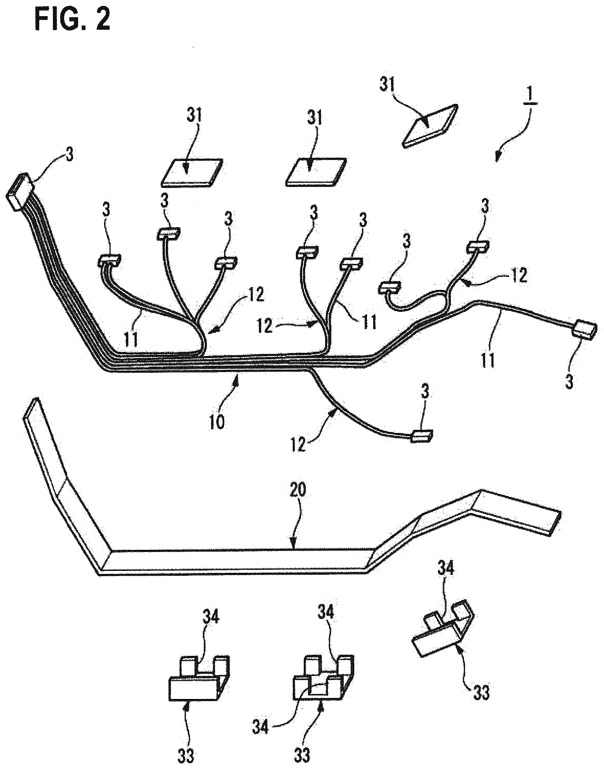

FIGS. 1 and 2 are an overall perspective view and an exploded perspective view illustrating a vehicle circuit body 1 according to the first embodiment of the present invention.

The vehicle circuit body 1 according to the first embodiment is routed on a floor panel, an instrument panel and the like of a vehicle, and is used to supply electric power of a main power supply such as an in-vehicle battery to auxiliary devices (electronic components) on portions of a vehicle body, or used as a transmission path necessary for exchanging signals between the electronic components.

Specifically, in order to simplify the structure, a power supply line having a prescribed current capacity is formed of a flat routing member 20 having a simple shape such as a backbone, and a communication line that performs prescribed communication and a ground line are formed of an electrical wire bundle 10 including a plurality of electrical wires 11 in a prescribed routing shape. The "prescribed current capacity" is, for example, a current capacity which is necessary when all electronic components that can be mounted on a target vehicle are mounted and used. The prescribed current capacity can also be configured to supply electric power to various auxiliary devices (electronic components) via branch lines connected to a plurality of control boxes (not illustrated) distributed along the flat routing member 20 for power supply.

As illustrated in FIGS. 1 and 2, the vehicle circuit body 1 according to the first embodiment includes: the flat routing member 20 constituting a main line of the vehicle circuit body 1; the electrical wire bundle 10 including the plurality of electrical wires 11 in a prescribed routing shape, in which a part of the electrical wire bundle 10 forms the main line together with the flat routing member 20 and is routed on the flat routing member 20; a branch protector 35 arranged at a main line branch position of the flat routing member 20 to hold a part of the electrical wires 11 as a branch line 12 from the electrical wire bundle 10; and a fixing member 5 such as an adhesive tape that fixes the part constituting the main line of the electrical wire bundle 10 routed on an upper surface of the flat routing member 20 to the flat routing member 20.

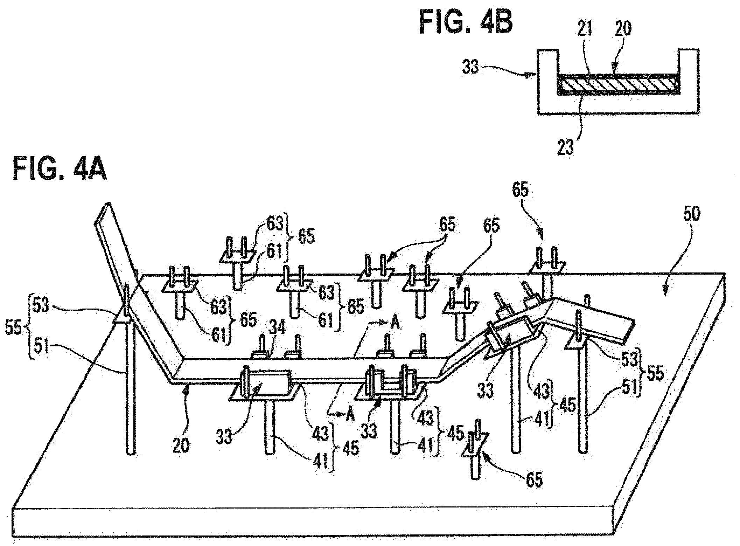

In the flat routing member 20 according to the first embodiment, a flat conductor 21 made of a strip-shaped conductive metal material (for example, copper or a copper alloy, aluminum or an aluminum alloy) having a flat cross section is bent into a prescribed shape along an attachment portion of the vehicle body, and a periphery of the flat routing member 20 is covered with an insulating coating 23 (see FIG. 4B).

The flat routing member 20 for power supply, which electrically connects electronic components and a power supply, requires a large cross sectional area to ensure the prescribed electric capacity, but is relatively easy to bend in a thickness direction. Accordingly, it is easy to route the flat routing member 20 along a prescribed routing path.

The electrical wire bundle 10 according to the first embodiment includes the plurality of electrical wires 11 each having a twisted wire. The electrical wire bundle 10 has a prescribed routing shape by: the part of the electrical wire bundle 10 which forms the main line and is routed on the flat routing member 20, and the branch line 12 which is branched from the main line routed on the flat routing member 20. A connector 3 to be connected to a junction block, an electronic component, and the like (not illustrated), is attached to a harness terminal of the main line and the branch line 12.

The branch protector 35 according to the first embodiment is a holding member made of a synthetic resin, arranged at the main line branch position of the flat routing member 20, and holds the branch line 12 branched from the main line of the electrical wire bundle 10 routed on the flat routing member 20 in a branched state.

As illustrated in FIG. 2, the branch protector 35 includes a main body 33 having a pair of side walls erect on both sides of a bottom wall, and a cover 31 on upper end portions of the pair of side walls. The main body 33 has a U-shaped cross section, and the pair of side walls interposes the flat routing member 20, which is fitted in the thickness direction, from a width direction. An interval between the pair of side walls of the main body 33 is appropriately set from a value slightly smaller to a value slightly larger than a width of the flat routing member 20.

At least one of the pair of side walls of the main body 33 of the branch protector 35 is formed with a branch line lead-out portion 34 to draw out the branch line 12 of the electrical wire bundle 10 which is branched from the main line. As shown in FIG. 2, the branch line lead-out portion 34 having the branch line lead-out portion 34 formed on one side wall and the branch line lead-out portion 34 having the branch line lead-out portion formed on both side wall may be used as the main body 33 in response to the number of branches. It is apparent that, by using only the main body 33 in which the branch line lead-out portion 34 is formed on both of the side walls, the branch protector 35 having the same form may be used at all branch locations.

The cover 31 on the upper end portions of the pair of side walls of the main body 33 is locked and fixed to the main body 33 by a lock mechanism (not illustrated), so that the electrical wires 11 routed on the flat routing member 20 can be prevented from jumping out. The cover 31 may be integrally molded with the main body 33 via a thin hinge portion.

According to the vehicle circuit body 1 according to the first embodiment, it is possible to form the main line having a simple structure with: the flat routing member 20 which forms the main line of the power supply line, and the part of the electrical wire bundle 10 which forms the main line, the electrical wire bundle 10 having a prescribed routing shape to form the communication line and the ground line. That is, the power supply line which is the main line in the vehicle circuit body 1 can be aggregated by the flat routing member 20 which includes the strip-shaped flat conductor 21 having a large cross sectional area in order to ensure the prescribed current capacity. The main line can be reduced in weight by reducing the number of electrical wires for power supply in the main line of the vehicle circuit body 1.

Since the flat conductor 21 of the flat routing member 20 is formed of a metal plate capable of maintaining a shape, a part thereof constituting the main line can be routed directly on the vehicle together with the electrical wire bundle 10 routed on the flat routing member 20, and a large protector that houses the main line of the vehicle circuit body 1 can be omitted.

Therefore, according to the vehicle circuit body 1 in the first embodiment, it is possible to provide a vehicle circuit body having a structure for electrically connecting various electronic components to a power supply in the vehicle and the various electronic components, particularly, a simplified configuration of the main line part.

According to the vehicle circuit body 1 in the first embodiment, the part of the electrical wires 11 branched from the main line of the electrical wire bundle 10 routed on the flat routing member 20 can be easily held as the branch line 12 by the branch protector 35 arranged at the main line branch position of the flat routing member 20. Branch protectors 35 having the same form may be used at a plurality of branch locations to prevent an increase in cost due to an increase in the number of kinds of components.

The main body 33 of the branch protector 35 in which the electrical wires 11 are routed is covered with the cover 31, so that the electrical wires 11 can be prevented from jumping out. Regarding locations of the flat routing member 20 where the branch protector 35 is not arranged, tape winding or the like can be performed to prevent the electrical wires 11 from jumping out.

According to the vehicle circuit body 1 in the first embodiment, the part of the electrical wire bundle 10, which forms the main line and is routed on the upper surface of the flat routing member 20, is fixed by the fixing member 5 such as an adhesive tape. Therefore, the electrical wire bundle 10 is routed without spilling from the upper surface of the flat routing member 20, and a large protector that houses the main line of the vehicle circuit body 1 can be omitted. The fixing member 5 that fixes the part of the electrical wire bundle 10, which forms the main line and is routed on the upper surface of the flat routing member 20, to the flat routing member 20 is not limited to the adhesive tape, and various fixing members such as a binding band and a small protector may be used.

### [Method of Manufacturing Vehicle Circuit Body 1 According To First Embodiment]

The method of manufacturing the vehicle circuit body 1 according to the first embodiment is described below.

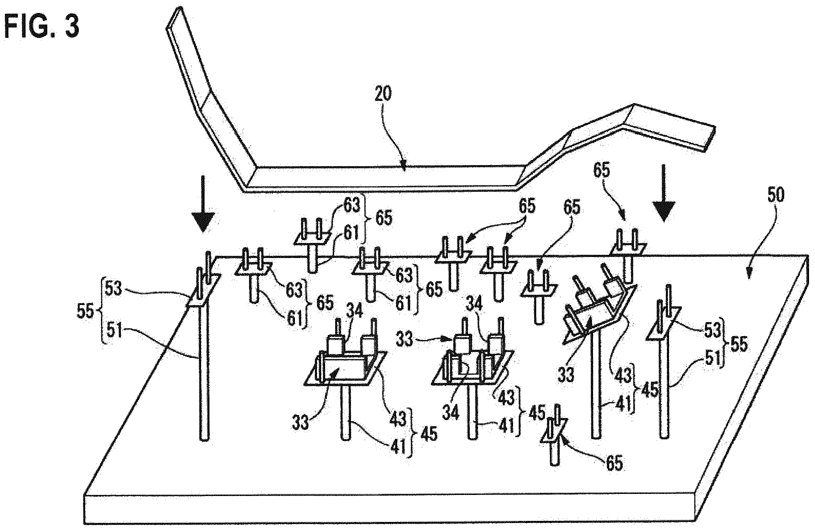

FIG. 3 is a schematic configuration view illustrating a wiring board 50 on which routing jigs 45, 55 and routing jigs 65 are arranged along a routing path of the vehicle circuit body 1 in FIG. 1 so as to manufacture the vehicle circuit body 1.

On the wiring board 50 in FIG. 3, the routing jigs 45, 55 are arranged in accordance with a routing path of the flat routing member 20 constituting the vehicle circuit body 1, and the routing jig 65 is arranged in accordance with a routing path of the electrical wire bundle 10.

In the routing jig 45, a base portion 41 is fixed on the wiring board 50 and a protector holding unit 43 that holds the main body 33 of the branch protector 35 is disposed on the base portion 41. The protector holding unit 43 includes a plurality of pins that hold the main body 33. The protector holding unit 43 can hold and fix the flat routing member 20 mounted via the held main body 33 at a prescribed position of the wiring board 50.

The routing jig 55 includes a base portion 51 fixed on the wiring board 50 and a pair of pin-shaped routing member holding units 53 on the base portion 51. The routing member holding units 53 can hold and fix the mounted flat routing member 20 at a prescribed position of the wiring board 50.

The routing jig 65 includes a base portion 61 fixed on the wiring board 50 and a pair of pin-shaped electrical wire hook portions 63 on the base portion 61, and is a routing jig for an terminal of the branch line 12. The electrical wire hook portions 63 has an interval and the like between pins so that the connector 3 and the like connected to the terminal of the branch line 12 can be easily hooked.

### (Main Line Arranging Step)

First, the flat routing member 20 is set on the routing jigs 45, 55 on the wiring board 50, as illustrated in FIGS. 3 and 4. A part of the flat routing member 20 set on the routing jig 45 is fitted into the main body 33 of the branch protector 35 held by the protector holding unit 43 from a plate thickness direction. A part of the flat routing member 20 set on the routing jig 55 is interposed by the pair of pin-shaped routing member holding units 53 from a width direction. Therefore, the flat routing member 20 is held and fixed at a prescribed position of the wiring board 50 by the routing jigs 45,55.

### (Wire Routing Step)

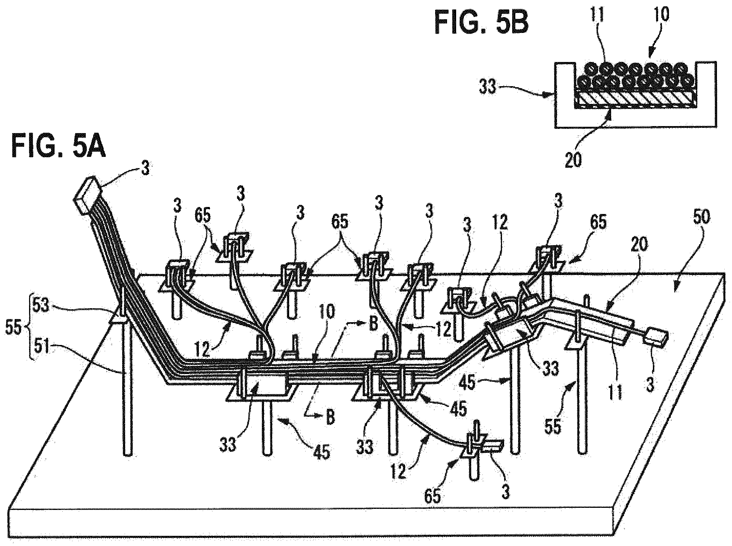

Next, the part of the electrical wire bundle 10 which forms the main line is routed on the upper surface of the flat routing member 20, the plurality of electrical wires 11 having a prescribed routing shape, as illustrated in FIG. 5. The part of the electrical wires 11 branched from the main line of the electrical wire bundle 10 routed on the flat routing member 20 is drawn out of the branch line lead-out portion 34 of the main body 33 of the branch protector 35 and is branched as the branch line 12.

Then, the connector 3 connected to a terminal of the branch line 12 drawn out of the branch line lead-out portion 34 of the main body 33 is hooked to the electrical wire hook portions 63 of the routing jig 65, thereby forming the electrical wire bundle 10 routed in a prescribed size and shape.

### (Tape Winding Step)

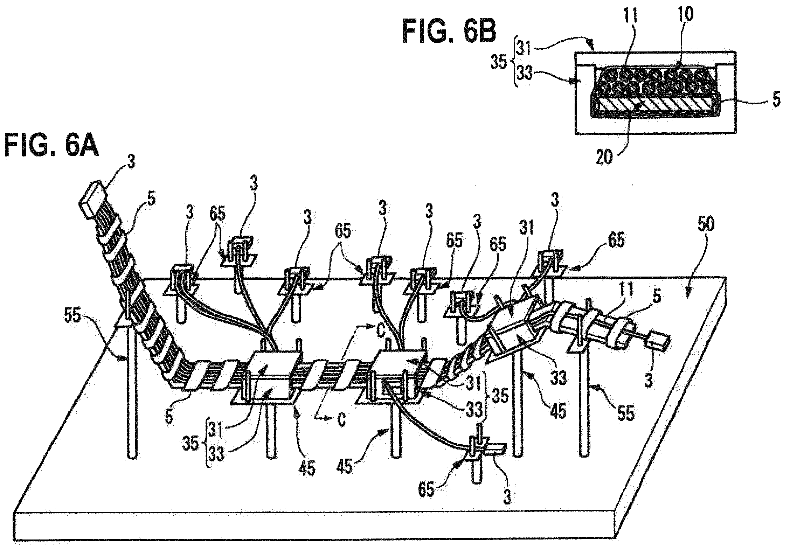

Next, the part of the electrical wire bundle 10, which forms the main line and is routed on the upper surface of the flat routing member 20, is fixed by the fixing member 5 such as an adhesive tape which is wound together with the flat routing member 20, as illustrated in FIG. 6. Therefore, the electrical wire bundle 10 is routed without spilling from the upper surface of the flat routing member 20.

According to the method of manufacturing the vehicle circuit body 1 in the first embodiment, it is possible to manufacture the vehicle circuit body 1 including the main line having a simple structure with: the flat routing member 20 which forms the main line, and the part of the electrical wire bundle 10 which forms the main line, the electrical wire bundle 10 having a prescribed routing shape. That is, the power supply line which is the main line can be aggregated by the flat routing member 20 which includes the strip-shaped flat conductor 21 having a large cross sectional area in order to ensure the prescribed current capacity and the number of electrical wires for power supply in the main line can be reduced. Therefore, it is possible to reduce time for routing the electrical wire bundle 10 when the vehicle circuit body 1 is manufactured.

Since the flat routing member 20 is formed of a metal plate that can maintain a shape, the flat routing member 20 can be directly arranged on the routing jigs 45, 55 on the wiring board 50, and the part of the electrical wire bundle 10 which forms the main line can be directly arranged on the flat routing member 20, so that a large protector that houses the main line of the vehicle circuit body 1 can be omitted. Therefore, the protector dedicated jig 160 as illustrated in FIG. 19, which includes the protector holding unit 153 that holds the main body 121 of the protector 120, is not necessarily used, and the routing can be performed on the wiring board 50 including only the routing jigs 45, 55 of normal configuration.

Therefore, according to the method of manufacturing the vehicle circuit body 1, it is possible to manufacture the vehicle circuit body 1 having a structure for electrically connecting various electronic components to a power supply in the vehicle and to the electronic components, particularly, a simplified configuration of the main line part.

### [Vehicle Circuit Body of Second Embodiment]

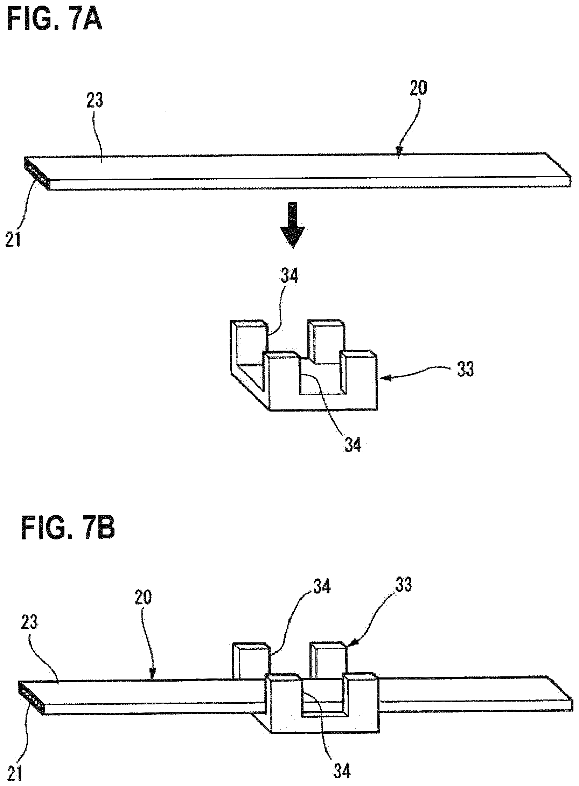

FIGS. 7 to 9 are exploded perspective views and a perspective view illustrating a main part of a main line of a vehicle circuit body 1A according to the second embodiment of the present invention.

In the vehicle circuit body 1A according to the second embodiment, first, the flat routing member 20 is fitted, in a plate thickness direction, into the main body 33 of the branch protector 35 held by the protector holding unit 43 (not illustrated) of the routing jig 45, as illustrated in FIG. 7.

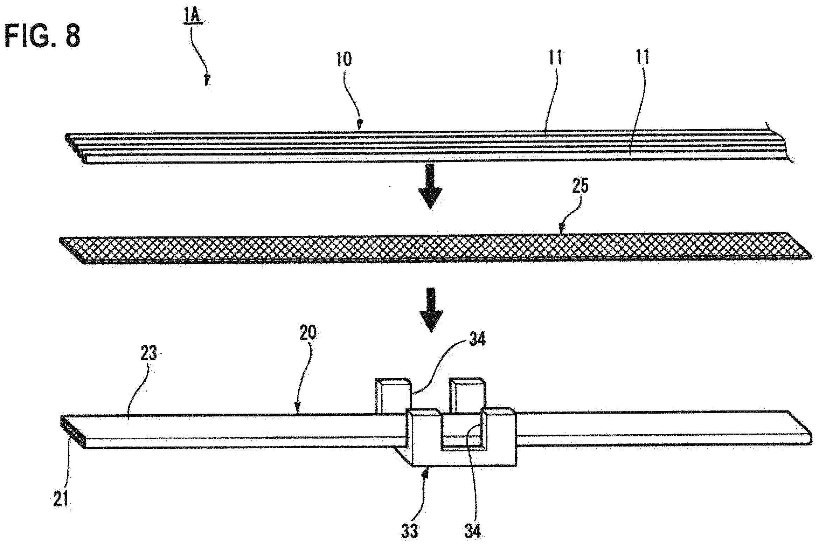

As illustrated in FIG. 8, a shielding member 25 made of braided wires is arranged on an upper surface of the flat routing member 20. A part of the electrical wire bundle 10 which forms the main line is routed from above the shielding member 25, in which the plurality of electrical wires 11 in the electrical wire bundle 10 have a prescribed routing shape.

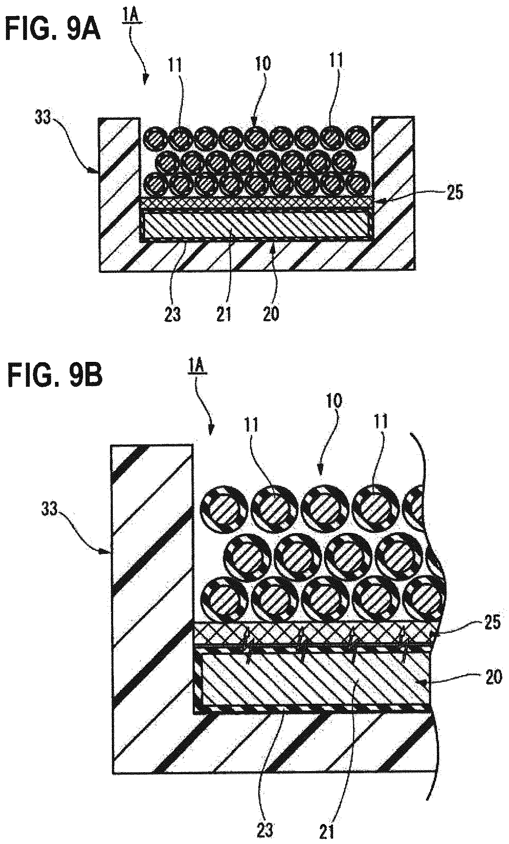

As a result, according to the vehicle circuit body 1A according to the second embodiment, the shielding member 25 that blocks noises is disposed between the flat routing member 20 for power supply, which electrically connects electronic components and a power supply, and the electrical wire bundle 10 routed on the flat routing member 20, as illustrated in FIG. 9. Therefore, electromagnetic noises generated by a large current flowing through the flat routing member 20 are blocked by the shielding member 25, so that noises do not go to a communication electrical wire or the like of the electrical wire bundle 10. As a result, noise countermeasures applied to a plurality of communication electrical wires in the related art are not necessary, and cost can be reduced.

### [Vehicle Circuit Body of Third Embodiment]

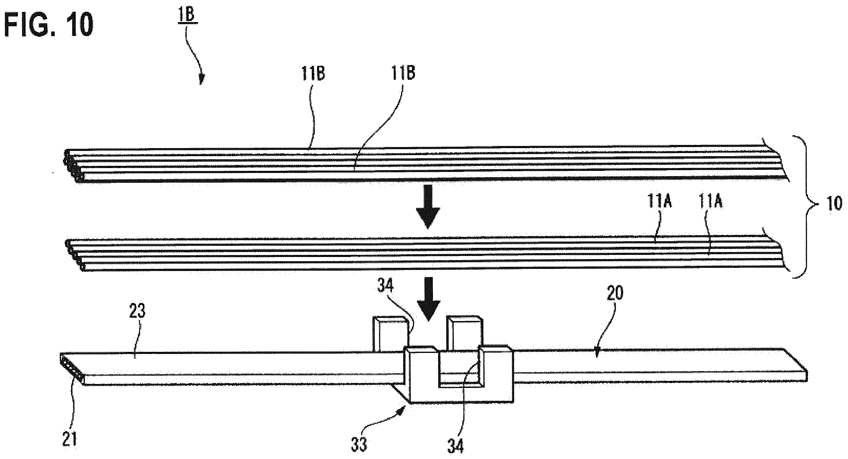

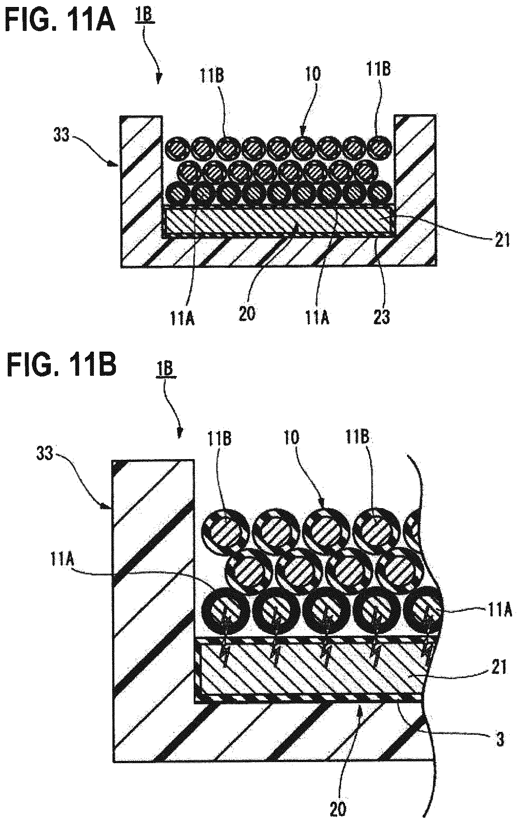

FIGS. 10 and 11 are an exploded perspective view and a cross-sectional view illustrating a main part of a main line of a vehicle circuit body 1B according to the third embodiment of the present invention.

In the vehicle circuit body 1B according to the third embodiment, as illustrated in FIG. 10, a part of the electrical wire bundle 10 which forms the main line includes a plurality of ground electrical wires 11A arranged in parallel on the flat routing member 20 for power supply and communication electrical wires 11B stacked on the ground electrical wires 11A.

As a result, according to the vehicle circuit body 1B according to the third embodiment, the electrical wire bundle 10 is routed on the flat wiring member 20 for power supply that electrically connects electronic components and a power supply, in which the part of the electrical wire bundle 10 which forms the main line is routed separately as the plurality of ground electrical wires 11A arranged in parallel on the flat routing member 20 and the communication electrical wires 11B stacked on the ground electrical wires 11A, as illustrated in FIG. 11.

Therefore, electromagnetic noises generated by a large current flowing through the flat routing member 20 are blocked by the plurality of ground electrical wires 11A in the electrical wire bundle 10, and noises do not go to the communication electrical wires 12B stacked on the plurality of ground electrical wires 11A. That is, electromagnetic noises generated from the flat routing member 20 are blocked by a canceling effect of electromagnetic noises generated from the ground electrical wires 11A. As a result, the number of components is not increased, noise countermeasures applied to a plurality of communication electrical wires in the related art can be omitted, and cost can be reduced.

Therefore, according to the vehicle circuit bodies 1A, 1B according to the second and the third embodiments, it is possible to provide a vehicle circuit body having a structure for electrically connecting various electronic components to a power supply in the vehicle and to the electronic components, particularly, a simplified configuration of the main line part and a configuration which can increase noise resistance performance.

### [Vehicle Circuit Body of Fourth Embodiment]

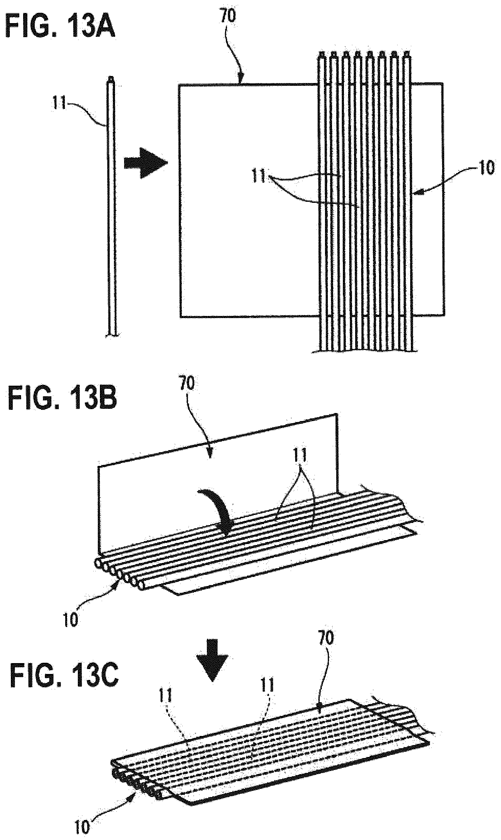

FIGS. 13 to 15 illustrate procedures of forming a sub-harness constituting a main line of a vehicle circuit body 1C according to the fourth embodiment of the present invention.

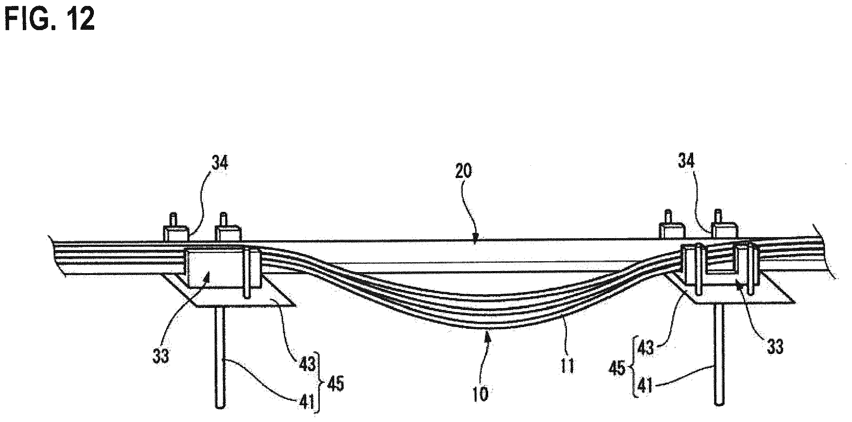

For example, a main line of the electrical wire bundle 10 routed on the flat routing member 20 held by a plurality of routing jigs 45 arranged at a prescribed interval may spill from an upper surface of the flat routing member 20, as illustrated in FIG. 12. At this time, it is necessary to return the spilled electrical wires 11 to the upper surface of the flat routing member 20, resulting in a reduced workability.

Therefore, as illustrated in FIG. 13A, a plurality of electrical wires 11 constituting the main line of the electrical wire bundle 10 are placed on a right half of one sheet member 70 such as a PET sheet. As illustrated in FIG. 13B, a left half of the sheet member 70 is folded to an upper side of the electrical wires 11. Accordingly, as illustrated in FIG. 13C, the plurality of electrical wires 11 constituting the main line of the electrical wire bundle 10 are collectively sandwiched in the sheet member 70, so that the electrical wires 11 do not spill from an upper surface of the flat routing member 20, resulting in an easy routing.

As illustrated in FIG. 13, the sheet member 70 which sandwiches the plurality of electrical wires 11 may be folded at a middle portion thereof, or two sheet members 70 may be overlapped and bonded together. The sheet member 70 is preferably a self-adhesive sheet in which a special adhesive layer is laminated on one surface of a general sheet base member, or a known adhesive sheet in which an adhesive is applied to at least a part of at least one surface of a sheet base member.

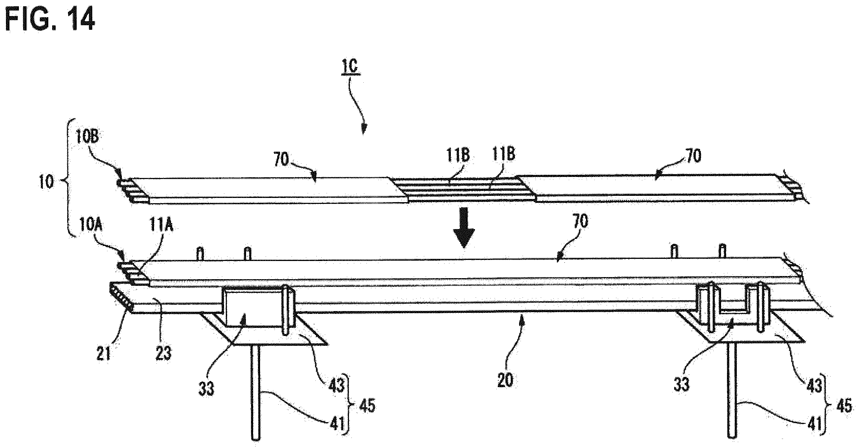

In the vehicle circuit body 1C according to the fourth embodiment of the present invention, as illustrated in FIG. 14, the part of the electrical wire bundle 10 which forms the main line includes a ground sub-harness 10A in which a plurality of ground electrical wires 11A are collectively sandwiched by the sheet member 70 and are disposed in parallel on the flat routing member 20, and a ground sub-harness 10B in which a plurality of communication electrical wires 11B are collectively sandwiched by the sheet member 70 and are stacked on the ground sub-harness 10A.

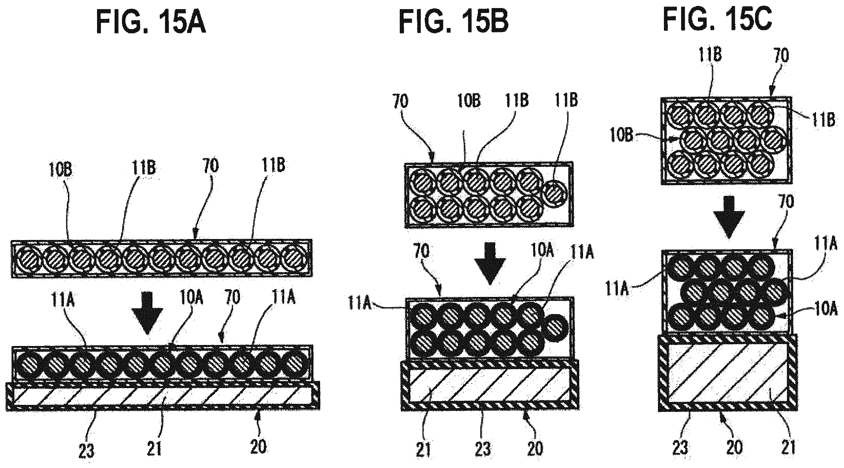

According to the vehicle circuit body 1C according to the fourth embodiment, as illustrated in FIG. 15A, the ground sub-harness 10A including the plurality of ground electrical wires 11A and the communication sub-harness 10B including the plurality of communication electrical wires 11B in the part of the electrical wire bundle 10 which forms the main line are collectively sandwiched by the sheet member 70 in advance, respectively.

Therefore, it is easy to route the plurality of ground electrical wires 11A and the plurality of communication electrical wires 11B on the flat routing member 20. The plurality of ground electrical wires 11A collectively sandwiched in the sheet member 70 are arranged in parallel without a gap therebetween, resulting in an improved effect of blocking electromagnetic noises by the ground electrical wires 11A.

Further, it is easy to route the ground sub-harness 10A and the communication sub-harness 10B which are respectively collectively sandwiched in the sheet member 70 with the electrical wires 11A and the communication wires 11B not spilling from the upper surface of the flat routing member 20.

In the vehicle circuit body 1C according to the fourth embodiment, as illustrated in FIGS. 15B and 15C, gathering shapes of the ground sub-harness 10A and the communication sub-harness 10B can be easily changed corresponding to the flat routing member 20 having different widths, resulting in an easy routing thereof to the flat routing member 20.

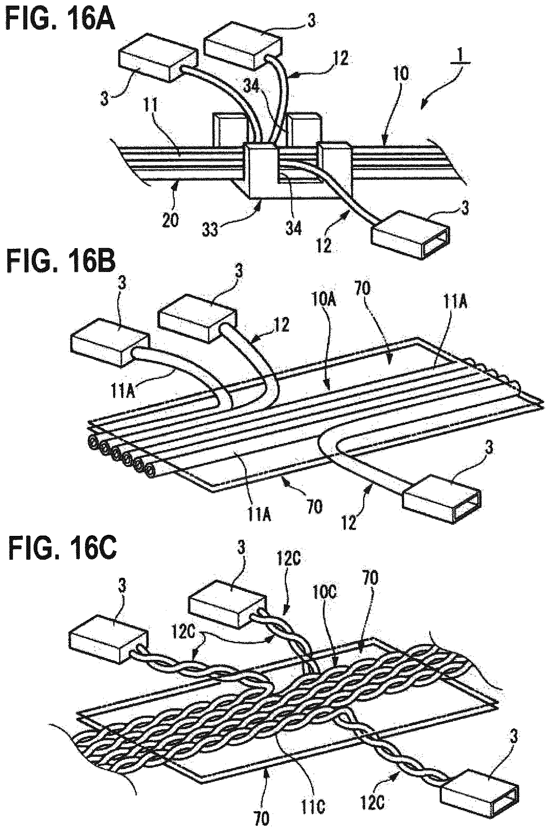

FIGS. 16A to 16C are enlarged perspective views illustrating a branch portion of the vehicle circuit body according to the fourth embodiment of the present invention.

FIG. 16A is an enlarged perspective view illustrating the branch portion of the vehicle circuit body 1 according to the first embodiment. The part of the electrical wires 11 branched from the main line of the electrical wire bundle 10 routed on the flat routing member 20 is drawn out of the branch line lead-out portion 34 of the main body 33 of the branch protector 35 and is branched as the branch line 12.

In contrast, in a case where a branch portion of the vehicle circuit body 1C according to the fourth embodiment is collectively sandwiched by two sheet members 70 made of a one-sided adhesive sheet as in the ground sub-harness 10A in FIG. 16B, a part of the ground electrical wires 11A branched from an intermediate portion of the main line sandwiched by the two sheet members 70 is held in a state of extending in a prescribed branch direction as the branch line 12. Therefore, the vehicle circuit body 1C can easily form the branch portion without using the branch protector 35.

Further, as illustrated in FIG. 16C, even when a communication sub-harness 10C includes a plurality of twisted electrical wires 11C and is collectively sandwiched between two sheet members 70 made of a single-sided adhesive sheet, a part of the twisted electrical wires 11C branched from the intermediate part of the main line sandwiched between the two sheet members 70 is held in a state of extending in a prescribed branch direction as the branch line 12C. Therefore, the branch portion of the vehicle circuit body can be easily formed also in the communication sub-harness 10C including the twisted electrical wires 11C without using the branch protector 35.

Therefore, according to the vehicle circuit body 1C according to the fourth embodiment, it is possible to provide a vehicle circuit body having a structure for electrically connecting various electronic components to a power supply in the vehicle and to the electronic components, particularly, a simplified configuration of the main line part and a configuration which can increase noise resistance performance.

### [Vehicle Circuit Body of Fifth Embodiment]

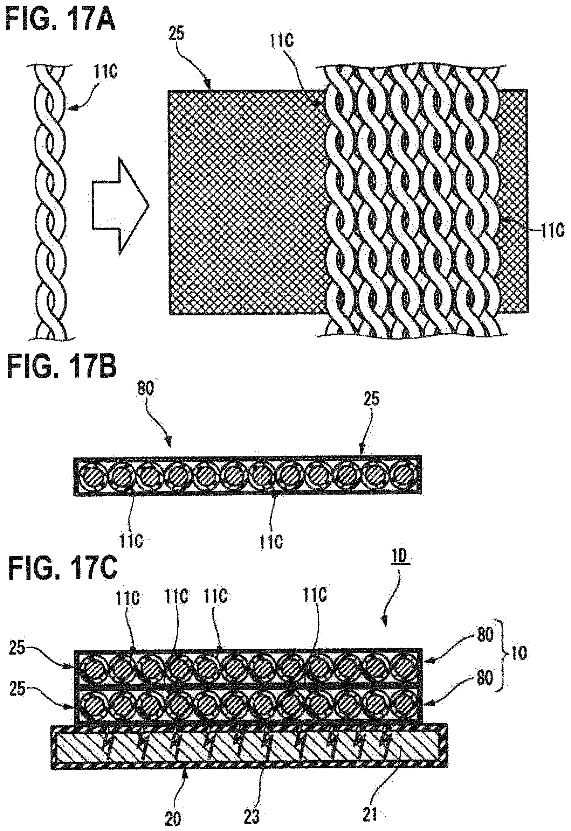

FIGS. 17A to 17C illustrate procedures of forming a main line of a vehicle circuit body 1D according to the fifth embodiment of the present invention.

As illustrated in FIG. 17A, a plurality of twisted wires 11C constituting a main line of a communication sub-harness (sub-harness) 80 are placed on a right half of the shielding member 25 made of braided wires, and a left half of the shielding member 25 is folded to an upper side of the twisted wires 11C. As illustrated in FIG. 17B, the plurality of twisted wires 11C constituting the main line of the communication sub-harness 80 are collectively sandwiched by one shielding member 25. As illustrated in FIG. 17C, a plurality of (two in the present embodiment) communication sub-harnesses 80 are routed on the flat routing member 20 for power supply, to form the main line of the vehicle circuit body 1D.

The shielding member 25 which collectively sandwiches the plurality of twisted electrical wires 11C constituting the main line of the communication sub-harness 80 is not limited to the braided wires, and various conductive sheets including a metal foil (aluminum foil) can also be used.

According to the vehicle circuit body 1D according to the fifth embodiment of the present invention, the plurality of twisted electrical wires 11C in the part of the electrical wire bundle 10 which forms the main line are gathered into each communication sub-harness 80 in advance and sandwiched by the shielding member 25 made of braided wires to block noises. Therefore, the communication sub-harness 80 is easily routed on the flat routing member 20 without the twisted electrical wires 11C spilling from an upper surface of the flat routing member 20. Further, electromagnetic noises generated by a large current flowing through the flat routing member 20 are blocked by the shielding member 25, so that noises do not go to the communication sub-harnesses 80 routed on the flat wiring member 20. As a result, noise countermeasures applied to a plurality of twisted electrical wires in the related art are not necessary, and cost can be reduced.

Therefore, according to the vehicle circuit body 1D according to the fifth embodiment, it is possible to provide a vehicle circuit body having a structure for electrically connecting various electronic components to a power supply in the vehicle and to the electronic components, particularly, a simplified configuration of the main line part and a configuration which can increase noise resistance performance.

## Claims

1. A vehicle circuit body (1B, 1C) comprising:
a flat routing member (20) that forms a main line of the vehicle circuit body (1B, 1C); and
an electrical wire bundle (10) that includes a plurality of electrical wires (11) in a prescribed routing shape, in which a part of the electrical wire bundle (10) which forms the main line is routed on the flat routing member (20), wherein
the part of the electrical wire bundle (10) which forms the main line includes:
a plurality of ground electrical wires (11A) disposed in parallel on the flat routing member (20) for power supply; and
communication electrical wires (11B) stacked on the ground electrical wires (11A).

2. The vehicle circuit body (1C) according to claim 1, further comprising:
a ground sub-harness (10A), in which the plurality of ground electrical wires (11A) are collectively sandwiched in a first sheet member (70); and
at least one communication sub-harness (10B) stacked on the ground sub-harness (10A), in which a plurality of the communication electrical wires (11B) are collectively sandwiched in a second sheet member (70) and stacked on the ground sub-harness (10A).

3. The vehicle circuit body (1B, 1C) according to claims 1 or 2, wherein a branch protector (35) is arranged at a main line branch position of the flat routing member (20) from the electrical wire bundle (10) to hold a part of the electrical wires (11) in a branched state.

4. The vehicle circuit body (1B, 1C) according to any one of claims 1 to 3, wherein the part of the electrical wire bundle (10) which forms the main line is fixed to an upper surface of the flat routing member (20) by a fixing member (5).

5. A method of manufacturing a vehicle circuit body (1) according to claim 1 using a routing jig (45, 55) on a wiring board (50), the method comprising:
routing a flat routing member (20) that forms a main line of a vehicle circuit body on the routing jig (45, 55), and
routing a part of an electrical wire bundle (10) which forms the main line on an upper surface of the flat routing member, in which the electrical wire bundle (10) includes a plurality of electrical wires (11) in a prescribed routing shape.

## Patentansprüche

1. Fahrzeug-Schaltungskörper (1B, 1C), der umfasst:
ein flaches Leitungsführungs-Element (20), das eine Hauptleitung des Fahrzeug-Schaltungskörpers (1B, 1C) bildet; sowie
ein Stromleiter-Bündel (10), das eine Vielzahl von Stromleitern (11) in einer vorgeschriebenen Leitungsführungs-Form einschließt, wobei ein Teil des Stromleiter-Bündels (10), der die Hauptleitung bildet, auf dem flachen Leitungsführungs-Element (20) geführt wird, und
der Teil des Stromleiter-Bündels (10), der die Hauptleitung bildet, enthält:
eine Vielzahl von Erdungs-Stromleitern (11A), die für Stromzufuhr parallel auf dem flachen Leitungsführungs-Element (20) angeordnet sind; und
Kommunikations-Stromleiter (11B), die auf die Erdungs-Stromleiter (11A) geschichtet sind.

2. Fahrzeug-Schaltungskörper (1C) nach Anspruch 1, der des Weiteren umfasst:
einen Erdungs-Teilkabelbaum (10A), in dem die Vielzahl von Erdungs-Stromleitern (11A) gemeinsam in einem ersten Folienelement (70) eingeschlossen sind; sowie
wenigstens einen Kommunikations-Teilkabelbaum (10B), der auf den Erdungs-Teilkabelbaum (10A) geschichtet ist, wobei eine Vielzahl der Kommunikations-Stromleiter (11B) gemeinsam in einem zweiten Folienelement (70) eingeschlossen und auf den Erdungs-Teilkabelbaum (10A) geschichtet sind.

3. Fahrzeug-Schaltungskörper (1B, 1C) nach Anspruch 1 oder 2, wobei eine Abzweigungs-Schutzeinrichtung (35) an einer Hauptleitungs-Abzweigungsposition des flachen Leitungsführungs-Elementes (20) von dem Stromleiter-Bündel (10) angeordnet ist und einen Teil der Stromleiter (11) in einem abgezweigten Zustand hält.

4. Fahrzeug-Schaltungskörper (1B, 1C) nach einem der geweihte 1 bis 3, wobei der Teil des Stromleiter-Bündels (10), der die Hauptleitung bildet, mit einem Befestigungselement (5) an einer oberen Fläche des flachen Leitungsführungs-Elementes (20) befestigt ist.

5. Verfahren zum Herstellen eines Fahrzeug-Schaltungskörpers (1) nach Anspruch 1 unter Verwendung einer Leitungsführungs-Vorrichtung (45, 55) auf einer Leiterplatte (50), wobei das Verfahren umfasst:
Führen eines flachen Leitungsführungs-Elementes (20), das eine Hauptleitung eines Fahrzeug-Schaltungskörpers bildet, an der Leitungsführungs-Vorrichtung (45, 55), und
Führen eines Teils eines Stromleiter-Bündels (10), der die Hauptleitung bildet, auf einer oberen Fläche des flachen Leitungsführungs-Elementes, wobei das Stromleiter-Bündel (10) eine Vielzahl von Stromleitern (11) in einer vorgeschriebenen Leitungsführungs-Form umfasst.

## Revendications

1. Corps de circuit de véhicule (1B, 1C) comprenant :
un premier élément de routage plat (20) qui forme une ligne principale du corps de circuit de véhicule (1B, 1C), et
un faisceau de fils électriques (10) qui inclut une pluralité de fils électriques (11) selon une forme de routage prescrite, dans lequel une partie du faisceau de fils électriques (10) qui forme la ligne principale est acheminée sur l'élément de routage plat (20), où
la partie du faisceau de fils électriques (10) qui forment la ligne principale inclut :
une pluralité de fils électriques de masse (11A) disposés en parallèle sur l'élément de routage plat (20) pour l'alimentation, et
des fils électriques de communication (11B) empilés sur les fils électriques de masse (11A).

2. Corps de circuit de véhicule (1B, 1C) selon la revendication 1, comprenant en outre :
un sous faisceau de masse (10A) dans lequel la pluralité de fils électriques de masse (11A) sont pris collectivement en sandwich dans un premier élément de feuille (70), et
au moins un sous faisceau de communication (10B) empilé sur le sous faisceau de masse (10A), dans lequel une pluralité de fils électriques de communication (11B) sont pris collectivement en sandwich dans un second élément de feuille (70) et sont empilés sur le sous faisceau de masse (10A) .

3. Corps de circuit de véhicule (1B, 1C) selon la revendication 1 ou la revendication 2, dans lequel un dispositif de protection de branchement (35) est disposé au niveau d'une position de branchement de ligne principale sur l'élément de routage plat (20) à partir du faisceau de fils électriques (10) pour maintenir une partie des fils électriques (11) à l'état branché.

4. Corps de circuit de véhicule (1B, 1C) selon l'une quelconque des revendications 1 à 3, dans lequel la partie du faisceau de fils électriques (10) qui forme la ligne principale est fixée à la surface supérieure de l'élément de routage plat (20) par un élément de fixation (5).

5. Procédé de fabrication d'un corps de circuit de véhicule (1) conforme à la revendication 1 en utilisant un gabarit de routage (45, 55) sur une carte de câblage (50), le procédé comprenant :
l'acheminement d'un élément de routage plat (100) qui forme une ligne principale du corps de circuit de véhicule sur le gabarit de routage (45, 55), et
le routage d'une partie d'un faisceau de fils électriques (10) qui forme la ligne principale sur la surface supérieure de l'élément de routage plat, dans lequel le faisceau de fils électriques (10) inclut une pluralité de fils électriques (11) selon une forme de routage prescrite.
